# EUROPÄISCHE PATENTSCHRIFT

(11) **EP 2 937 615 B1**
(45) Veröffentlichungstag und Bekanntmachung des Hinweises auf die Patenterteilung: **27.09.2017**
(21) Anmeldenummer: 15164386.3
(22) Anmeldetag: 21.04.2015
(51) Int. Cl.: F16L 37/14, F24D 3/12, F24D 19/00, F16L 13/10

(54) **DICHTMUFFE**
SEALING SLEEVE
MANCHON D'ÉTANCHÉITÉ

(30) Priorität: 22.04.2014 DE 102014207537
(43) Veröffentlichungstag der Anmeldung: 28.10.2015
(73) Patentinhaber: Vaillant GmbH, 42859 Remscheid (DE)
(72) Erfinder: Schnabl, Dennis, 42859 Remscheid (DE); Mayer, André, 58099 Hagen (DE); Tomkiewicz, Antoni, 40239 Düsseldorf (DE)
(74) Vertreter: Hocker, Thomas

(56) Entgegenhaltungen:
- AU-B2- 521 637
- DE-B- 1 229 351
- DE-U1- 29 609 748
- FR-A1- 2 891 889
- US-A1- 2002 014 771

## Beschreibung

Die Erfindung betrifft ein Verfahren zum Verbinden von hydraulischen oder pneumatischen Leitungen mit einer Dichtmuffe, insbesondere für Heizungen.

Bei Heizgeräten müssen wasserführende Teile wasserdicht miteinander verbunden werden. Die Verbindung soll in vielen Fällen wieder lösbar sein, um einen Ausbau von Bauteilen zu ermöglichen. Hierzu werden häufig Dichtmuffen verwendet. Diese werden häufig aus Messing hergestellt und mit Lot mit Rohren verlötet. Auch kann eine Dichtmuffe auf ein Rohr aufgeschoben werden und das Rohr dann hydraulisch aufgeweitet werden, so dass die Teile miteinander verpresst werden. Auch kann ein Anlötnippel mittels eines Lötrings verbunden werden.

Aus der Auslegeschrift DE 1 229 351 offenbart eine Rohrverbindung mit Keilring mit Längsschlitzen und mit zylindrischer Innenkontur. Zur Montage wird vorgeschlagen, Klebstoff auf den Außenumfang des inneren Rohres und auf den Keilring aufzubringen. Anschließend wird die Rohrverbindung zusammengeschoben.

Der Erfindung liegt die Aufgabe zugrunde, eine einfachere Verbindung zu ermöglichen.

Dies wird gemäß den Merkmalen des Anspruchs 1 dadurch gelöst, dass die Dichtmuffe eine im Wesentlichen zylindrische Innenkontur besitzt, wobei die Innenkontur über einen kanülenförmigen Spalt, der sich von einem axialen Ende axial in die Dichtmuffe erstreckt und im Inneren endet, verfügt. Durch diesen Spalt wird Klebstoff eingebracht, um die Dichtmuffe mit einer Leitung zu verbinden.

Vorteilhafte Ausgestaltungen ergeben sich aus den Merkmalen der abhängigen Ansprüche.

Verengt sich die Dichtmuffe in einem Bereich vom Ende des Spaltes, an welchem dieser beginnt bis zum Muffeninneren leicht kegelig oder konisch und erstreckt sich in einem weiteren Bereich mit konstantem, verengtem Durchmesser, so kann die Leitung einfacher eingeführt werden und der Klebstoff wird durch die Kapillarwirkung in die Verbindung gezogen.

Die Dichtmuffe kann aus Kunststoff hergestellt werden, da durch die Klebung auf Löten verzichtet werden kann und somit das Temperaturniveau beim Fügen geringere Materialanforderungen stellt.

Die Erfindung wird nun anhand der Figuren detailliert erläutert. Hierbei zeigen:
- Figur 1:: Eine Dichtmuffe gemäß dem Stand der Technik auf einer Leitung
- Figur 2:: Eine erfindungsgemäße Dichtmuffe auf einer Leitung
- Figur 3:: Die erfindungsgemäße Dichtmuffe
- Figur 4:: Eine Steckverbindung mit einer erfindungsgemäßen Dichtmuffe

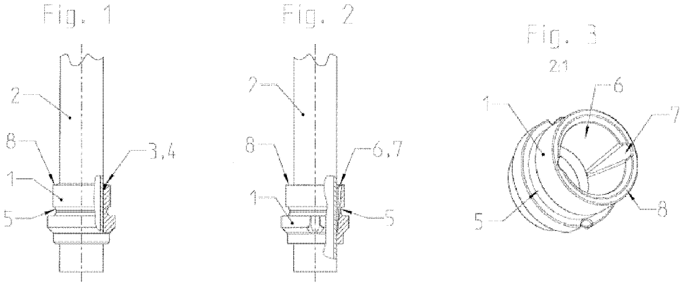

Figur 1 zeigt eine Dichtmuffe 1 auf einer Leitung 2, wobei der Innendurchmesser der Dichtmuffe 1 im Wesentlichen dem Außendurchmesser der Leitung 2 entspricht. Bei der Dichtmuffe 1 handelt es sich um ein Drehteil aus Messing, das im Wesentlichen eine zylindrische Innenkontur besitzt, mit einer Nut 5 zur Aufnahme einer Halteklammer. An einem axialen Ende 8 der Dichtmuffe 1 befindet sich an der Innenseite eine Fase 3 auf der Innenseite. Befindet sich die Dichtmuffe 1 über der Leitung 2, so kann Lot 4 in die Fase 3 eingebracht werden, so dass die Dichtmuffe 1 und die Leitung 2 dicht miteinander verbunden sind.

Figur 2 zeigt eine erfindungsgemäße Dichtmuffe 1 auf einer Leitung 2. Sie unterscheidet sich in der Form vom Stand der Technik im Wesentlichen dadurch, dass die Innenkontur der Dichtmuffe 1 über einen kanülenförmigen Spalt 7, der sich von einem axialen Ende 8 axial in die Dichtmuffe 1 erstreckt und im Inneren endet, verfügt. Vom selben axialen Ende 8 verengt sich der Durchmesser der Dichtmuffe 1 leicht mittels einer Kegelfläche 6 in Richtung des Dichtmuffeninneren, um sich in einem weiteren Bereich mit konstantem, verengtem Durchmesser zu erstrecken. Der Kegel weist hierbei einen Winkel kleiner 2°auf.

Zur Verbindung wird zunächst die Dichtmuffe 1 über die Leitung 2 geschoben. Anschließend wird Klebstoff in den kanülenförmigen Spalt 7 eingeführt, der sich durch die Kapillarwirkung sowohl in den kanülenförmigen Spalt 7, als auch in den kegelförmigen Raum zwischen Kegelfläche 6 der Dichtmuffe 1 und Leitung 2 zieht. Hierdurch erfolgt eine Verklebung über den gesamten radialen Umfang.

Da das Verkleben bei deutlich niedrigeren Temperaturen stattfindet als Löten, kann die Dichtmuffe 1 aus Kunststoff hergestellt sein.

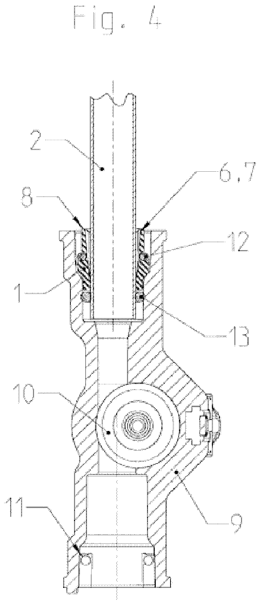

Figur 4 zeigt eine Leitung 2 mit erfindungsgemäßer Dichtmuffe 1 in einem Anschlussstück 9 mit Flügelradsensor 10. Über die Leitung 2 wird auf der dem kanülenförmigen Spalt 7 abgewandten Seite ein dichtender O-Ring 13 geschoben. Anschließend wird die Leitung 2 in das Anschlussstück 9 eingeführt, so dass der O-Ring 13 die Leitung 2 zum Anschlussstück 9 abdichtet. Durch 2 Bohrungen 11 im Anschlussstück 9 (zu sehen im unteren Teil des Anschlussstücks 9, in dem sich keine Leitung befindet) wird eine Halteklammer 12 eingeschoben, welche in die Nut 5 eingreift und die Leitung 2 gegen axiale Verschiebung sichert.

### Bezugszeichenliste

1 Dichtmuffe
2 Leitung
3 Fase
4 Lot
5 Nut
6 Kegelfläche
7 kanülenförmiger Spalt
8 axiales Ende
9 Anschlussstück
10 Flügelradsensor
11 Bohrung
12 Halteklammer
13 O-Ring

## Patentansprüche

1. Verfahren zum Verbinden von hydraulischen oder pneumatischen Leitungen (2) mit einer Dichtmuffe (1), wobei die Dichtmuffe (1) eine im Wesentlichen zylindrische Innenkontur besitzt, wobei die Innenkontur über einen kanülenförmigen Spalt (7), der sich von einem axialen Ende (8) axial in die Dichtmuffe erstreckt und im Inneren endet, verfügt, wobei sich der Innendurchmesser der Dichtmuffe (1) vom axialen Ende (8) leicht mittels einer Kegelfläche (6) in Richtung des Dichtmuffeninneren verengt, um sich in einem weiteren Bereich mit konstantem, verengtem Durchmesser zu erstrecken, wobei zunächst die Dichtmuffe (1) über die Leitung (2) geschoben wird und anschließend Klebstoff in den kanülenförmigen Spalt (7) eingeführt wird, welcher Kunststoff sich durch die Kapillarwirkung sowohl in den kanülenförmigen Spalt (7), als auch in den kegelförmigen Raum zwischen Kegelfläche (6) der Dichtmuffe (1) und Leitung (2) zieht, so dass eine Verklebung über den gesamten radialen Umfang erfolgt.

2. Verfahren nach Anspruch 1, **wobei** der Kegel einen Winkel kleiner 2°aufweist.

3. Verfahren nach Anspruch 1 oder 2, **wobei** die Dichtmuffe aus Kunststoff hergestellt ist.

## Claims

1. Method for connecting hydraulic or pneumatic lines (2) to a sealing sleeve (1), wherein the sealing sleeve (1) has a substantially cylindrical inner contour, wherein the inner contour has a cannula-shaped gap (7) which extends axially into the sealing sleeve from an axial end (8) and ends in the interior, wherein the inner diameter of the sealing sleeve (1) narrows slightly from the axial end (8) by means of a conical surface (6) in the direction of the sealing sleeve interior in order to extend with constant, narrowed diameter in an additional region wherein the sealing sleeve (1) is initially pushed via the line (2) and adhesive is then introduced into the cannula-shaped gap (7) which draws plastic by way of the capillary effect both into the cannula-shaped gap (7) and into the conical space between the conical surface (6) of the sealing sleeve (1) and the line (2) such that adherence takes place over the entire radial circumference.

2. Method according to claim 1, **wherein** the cone has an angle of less than 2°.

3. Method according to claim 1 or 2, **wherein** the sealing sleeve is manufactured from plastic.

## Revendications

1. Procédé destiné à relier des conduites hydrauliques ou pneumatiques (2) avec un manchon étanche (1),
dans lequel le manchon étanche (1) a un contour intérieur globalement cylindrique,
dans lequel le contour intérieur dispose d'une fente (7), en forme de canule, qui s'étend de façon axiale d'une extrémité axiale (8) jusque dans le manchon étanche et qui se termine à l'intérieur,
dans lequel le diamètre intérieur du manchon étanche (1) se rétrécit légèrement de l'extrémité axiale (8) en direction de l'intérieur de manchon étanche au moyen d'une surface conique (6) pour s'étendre avec un diamètre rétréci et constant dans une autre zone,
dans lequel le manchon étanche (1) est d'abord poussé sur la conduite (2) et un adhésif est ensuite introduit dans la fente (7) en forme de canule, lequel plastique s'étire par capillarité aussi bien dans la fente (7) en forme de canule que dans l'espace conique entre la surface conique (6) du manchon étanche (1) et la conduite (2) de telle sorte qu'un collage s'effectue sur toute la périphérie radiale.

2. Procédé selon la revendication 1, **dans lequel** le cône présente un angle inférieur à 2°.

3. Procédé selon la revendication 1 ou 2, **dans lequel** le manchon étanche est fabriqué en plastique.
